# EUROPEAN PATENT APPLICATION

(11) **EP 4 319 082 A1**
(43) Date of publication of application: **07.02.2024**
(21) Application number: 22189086.6
(22) Date of filing: 05.08.2022
(51) Int. Cl.: H04L 41/14, H04L 41/16, H04M 15/00

(54) **METHOD, APPARATUS AND COMPUTER PROGRAM**

(71) Applicant: Nokia Solutions and Networks Oy, 02610 Espoo (FI)
(72) Inventor: PEREIRA RODRIGUES, Joao Antonio, 1600-097 Lisbon (PT); SAMDANIS, Konstantinos, 81927 Munich (DE)
(74) Representative: Nokia EPO representatives

(57) **Abstract**

A method comprising: receiving, at a first apparatus and from a second apparatus, a first request for analytics; based on the first request, sending from the first apparatus to a third apparatus a second request, the second request for coordination between the first apparatus and the third apparatus to provide the analytics, the second request comprising information of the analytics; receiving, at the first apparatus from the third apparatus, a response comprising information reporting at least one of an amount of computational resources used to perform the analytics at the third apparatus and data provided by the analytics at the third apparatus.

## Description

### Field

The present application relates to a method, apparatus, and computer program for a wireless communication system.

### Background

A communication system may be a facility that enables communication sessions between two or more entities such as user terminals, base stations/access points and/or other nodes by providing carriers between the various entities involved in the communications path. A communication system may be provided, for example, by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite-based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### Summary

According to a first aspect there is provided an apparatus comprising means for performing: receiving, at the apparatus and from a second apparatus, a first request for analytics; based on the first request, sending from the apparatus to a third apparatus a second request, the second request for coordination between the apparatus and the third apparatus to provide the analytics, the second request comprising information of the analytics; receiving, at the apparatus from the third apparatus, a response comprising information reporting at least one of an amount of computational resources used to perform the analytics at the third apparatus and data provided by the analytics at the third apparatus.

According to some examples, the means are for performing: sending, to a charging function, a third request, the third request to open a charging data record for the analytics, wherein the third request comprises: information reporting at least one of an amount of computational resources used to perform the analytics at the apparatus and data provided by the analytics at the apparatus; and the information reporting the at least one of an amount of computational resources used to perform the analytics at the third apparatus and data provided by the analytics at the third apparatus; wherein the method further comprises: receiving, from the charging function, a message confirming that the charging data record has been opened.

According to some examples, the third request comprises an indication of whether the charging data record is to be created after the analytics is provided or while the analytics is provided.

According to some examples, the apparatus comprises a Management Data Analytics Service and the third apparatus comprises a Network Data Analytics Function.

According to some examples, the apparatus comprises a Network Data Analytics Function and the third apparatus comprises a Management Data Analytics Service.

According to some examples, the information of the analytics comprised in the second request comprises at least one of: a type of analytics required from the third apparatus; an Artificial Intelligence model to be used for the analytics; a Machine Learning model to be used for the analytics; an input data type for the analytics; at least one data source for the analytics; urgency of the analytics; scheduling of the analytics; type of reporting required for the analytics; one or more filtering conditions.

According to some examples, the response comprises charging information corresponding to the amount of computational resources used at the third apparatus.

According to some examples, the means are for performing: detecting a usage reporting trigger of the analytics, and in response: sending, to the charging function, a request for an update of the charging data record, wherein the request to update the charging data record for the analytics comprises at least one information element describing the analytics; receiving, from the charging function, a response confirming that the charging data record has been updated.

According to some examples, wherein the means are for performing: using, at the apparatus, the data provided by the analytics at the third apparatus to perform the analytics of the first request.

According to some examples, the apparatus comprises a master node.

According to some examples, the second apparatus comprises an analytics consumer.

According to some examples, the third apparatus comprises a slave node.

According to a second aspect there is provided an apparatus comprising: at least one processor; and at least one memory including computer program code; the at least one memory and the computer program code configured to, with the at least one processor, cause the apparatus at least to perform: receiving, at the apparatus and from a second apparatus, a first request for analytics; based on the first request, sending from the apparatus to a third apparatus a second request, the second request for coordination between the apparatus and the third apparatus to provide the analytics, the second request comprising information of the analytics; receiving, at the apparatus from the third apparatus, a response comprising information reporting at least one of an amount of computational resources used to perform the analytics at the third apparatus and data provided by the analytics at the third apparatus.

According to some examples, the at least one memory and the computer program code are configured to, with the at least one processor, cause the apparatus at least to perform: sending, to a charging function, a third request, the third request to open a charging data record for the analytics, wherein the third request comprises: information reporting at least one of an amount of computational resources used to perform the analytics at the apparatus and data provided by the analytics at the apparatus; and the information reporting the at least one of an amount of computational resources used to perform the analytics at the third apparatus and data provided by the analytics at the third apparatus; wherein the method further comprises: receiving, from the charging function, a message confirming that the charging data record has been opened.

According to some examples, the third request comprises an indication of whether the charging data record is to be created after the analytics is provided or while the analytics is provided.

According to some examples, the apparatus comprises a Management Data Analytics Service and the third apparatus comprises a Network Data Analytics Function.

According to some examples, the apparatus comprises a Network Data Analytics Function and the third apparatus comprises a Management Data Analytics Service.

According to some examples, the information of the analytics comprised in the second request comprises at least one of: a type of analytics required from the third apparatus; an Artificial Intelligence model to be used for the analytics; a Machine Learning model to be used for the analytics; an input data type for the analytics; at least one data source for the analytics; urgency of the analytics; scheduling of the analytics; type of reporting required for the analytics; one or more filtering conditions.

According to some examples, the response comprises charging information corresponding to the amount of computational resources used at the third apparatus.

According to some examples, the at least one memory and the computer program code are configured to, with the at least one processor, cause the apparatus at least to perform: detecting a usage reporting trigger of the analytics, and in response: sending, to the charging function, a request for an update of the charging data record, wherein the request to update the charging data record for the analytics comprises at least one information element describing the analytics; receiving, from the charging function, a response confirming that the charging data record has been updated.

According to some examples, wherein the at least one memory and the computer program code are configured to, with the at least one processor, cause the apparatus at least to perform: using, at the apparatus, the data provided by the analytics at the third apparatus to perform the analytics of the first request.

According to some examples, the apparatus comprises a master node.

According to some examples, the second apparatus comprises an analytics consumer.

According to some examples, the third apparatus comprises a slave node.

According to a third aspect there is provided an apparatus comprising: circuitry for: receiving, at a first apparatus and from a second apparatus, a first request for analytics; based on the first request, sending from the first apparatus to a third apparatus a second request, the second request for coordination between the first apparatus and the third apparatus to provide the analytics, the second request comprising information of the analytics; receiving, at the first apparatus from the third apparatus, a response comprising information reporting at least one of an amount of computational resources used to perform the analytics at the third apparatus and data provided by the analytics at the third apparatus.

According to a fourth aspect there is provided a method comprising: receiving, at a first apparatus and from a second apparatus, a first request for analytics; based on the first request, sending from the first apparatus to a third apparatus a second request, the second request for coordination between the first apparatus and the third apparatus to provide the analytics, the second request comprising information of the analytics; receiving, at the first apparatus from the third apparatus, a response comprising information reporting at least one of an amount of computational resources used to perform the analytics at the third apparatus and data provided by the analytics at the third apparatus.

According to some examples, the method comprises: sending, to a charging function, a third request, the third request to open a charging data record for the analytics, wherein the third request comprises: information reporting at least one of an amount of computational resources used to perform the analytics at the first apparatus and data provided by the analytics at the first apparatus; and the information reporting the at least one of an amount of computational resources used to perform the analytics at the third apparatus and data provided by the analytics at the third apparatus; wherein the method further comprises: receiving, from the charging function, a message confirming that the charging data record has been opened.

According to some examples, the third request comprises an indication of whether the charging data record is to be created after the analytics is provided or while the analytics is provided.

According to some examples, the first apparatus comprises a Management Data Analytics Service and the third apparatus comprises a Network Data Analytics Function.

According to some examples, the first apparatus comprises a Network Data Analytics Function and the third apparatus comprises a Management Data Analytics Service.

According to some examples, the information of the analytics comprised in the second request comprises at least one of: a type of analytics required from the third apparatus; an Artificial Intelligence model to be used for the analytics; a Machine Learning model to be used for the analytics; an input data type for the analytics; at least one data source for the analytics; urgency of the analytics; scheduling of the analytics; type of reporting required for the analytics; one or more filtering conditions.

According to some examples, the response comprises charging information corresponding to the amount of computational resources used at the third apparatus.

According to some examples, the method comprises: detecting a usage reporting trigger of the analytics, and in response: sending, to the charging function, a request for an update of the charging data record, wherein the request to update the charging data record for the analytics comprises at least one information element describing the analytics; receiving, from the charging function, a response confirming that the charging data record has been updated.

According to some examples, the method comprises: using, at the first apparatus, the data provided by the analytics at the third apparatus to perform the analytics of the first request.

According to some examples, the first apparatus comprises a master node.

According to some examples, the second apparatus comprises an analytics consumer.

According to some examples, the third apparatus comprises a slave node.

According to a fifth aspect there is provided a computer program comprising instructions for causing an apparatus to perform at least the following: receiving, at the apparatus and from a second apparatus, a first request for analytics; based on the first request, sending from the apparatus to a third apparatus a second request, the second request for coordination between the first apparatus and the third apparatus to provide the analytics, the second request comprising information of the analytics; receiving, at the apparatus from the third apparatus, a response comprising information reporting at least one of an amount of computational resources used to perform the analytics at the third apparatus and data provided by the analytics at the third apparatus.

According to a sixth aspect there is provided a computer program comprising instructions stored thereon for performing at least the following: receiving, at a first apparatus and from a second apparatus, a first request for analytics; based on the first request, sending from the first apparatus to a third apparatus a second request, the second request for coordination between the first apparatus and the third apparatus to provide the analytics, the second request comprising information of the analytics; receiving, at the first apparatus from the third apparatus, a response comprising information reporting at least one of an amount of computational resources used to perform the analytics at the third apparatus and data provided by the analytics at the third apparatus.

According to a seventh aspect there is provided a non-transitory computer readable medium comprising program instructions for causing an apparatus to perform at least the following: receiving, at the apparatus and from a second apparatus, a first request for analytics; based on the first request, sending from the apparatus to a third apparatus a second request, the second request for coordination between the first apparatus and the third apparatus to provide the analytics, the second request comprising information of the analytics; receiving, at the apparatus from the third apparatus, a response comprising information reporting at least one of an amount of computational resources used to perform the analytics at the third apparatus and data provided by the analytics at the third apparatus.

According to an eighth aspect there is provided a non-transitory computer readable medium comprising program instructions stored thereon for performing at least the following: receiving, at a first apparatus and from a second apparatus, a first request for analytics; based on the first request, sending from the first apparatus to a third apparatus a second request, the second request for coordination between the first apparatus and the third apparatus to provide the analytics, the second request comprising information of the analytics; receiving, at the first apparatus from the third apparatus, a response comprising information reporting at least one of an amount of computational resources used to perform the analytics at the third apparatus and data provided by the analytics at the third apparatus.

According to a ninth aspect there is provided an apparatus comprising means for performing: receiving, at the apparatus and from a second apparatus, a first request for analytics for a third apparatus; performing, by the apparatus, the analytics based on the first request; sending, from the apparatus to the second apparatus, a response comprising information reporting at least one of an amount of computational resources used to perform the analytics at the first apparatus and data provided by the analytics at the first apparatus.

According to some examples, the apparatus comprises a Management Data Analytics Service and the second apparatus comprises a Network Data Analytics Function; or the apparatus comprises a Network Data Analytics Function and the second apparatus comprises a Management Data Analytics.

According to some examples, the first request comprises at least one information element indicating: a type of analytics required from the apparatus; an Artificial Intelligence model to be used for the analytics; a Machine Learning model to be used for the analytics; an input data type for the analytics; at least one data source for the analytics; urgency of the analytics; scheduling of the analytics; type of reporting required for the analytics; one or more filtering conditions.

According to some examples, the apparatus comprises a slave node.

According to some examples, the second apparatus comprises a master node.

According to some examples, the third apparatus comprises an analytics consumer.

According to a tenth aspect there is provided an apparatus comprising: at least one processor; and at least one memory including computer program code; the at least one memory and the computer program code configured to, with the at least one processor, cause the apparatus at least to perform: receiving, at the apparatus and from a second apparatus, a first request for analytics for a third apparatus; performing, by the apparatus, the analytics based on the first request; sending, from the apparatus to the second apparatus, a response comprising information reporting at least one of an amount of computational resources used to perform the analytics at the first apparatus and data provided by the analytics at the first apparatus.

According to some examples, the apparatus comprises a Management Data Analytics Service and the second apparatus comprises a Network Data Analytics Function; or the apparatus comprises a Network Data Analytics Function and the second apparatus comprises a Management Data Analytics.

According to some examples, the first request comprises at least one information element indicating: a type of analytics required from the apparatus; an Artificial Intelligence model to be used for the analytics; a Machine Learning model to be used for the analytics; an input data type for the analytics; at least one data source for the analytics; urgency of the analytics; scheduling of the analytics; type of reporting required for the analytics; one or more filtering conditions.

According to some examples, the apparatus comprises a slave node.

According to some examples, the second apparatus comprises a master node.

According to some examples, the third apparatus comprises an analytics consumer.

According to an eleventh aspect there is provided an apparatus comprising: circuitry for: receiving, at the apparatus and from a second apparatus, a first request for analytics for a third apparatus; performing, by the apparatus, the analytics based on the first request; sending, from the apparatus to the second apparatus, a response comprising information reporting at least one of an amount of computational resources used to perform the analytics at the first apparatus and data provided by the analytics at the first apparatus.

According to a twelfth aspect there is provided a method comprising: receiving, at a first apparatus and from a second apparatus, a first request for analytics for a third apparatus; performing, by the first apparatus, the analytics based on the first request; sending, from the first apparatus to the second apparatus, a response comprising information reporting at least one of an amount of computational resources used to perform the analytics at the first apparatus and data provided by the analytics at the first apparatus.

According to some examples, the first apparatus comprises a Management Data Analytics Service and the second apparatus comprises a Network Data Analytics Function; or the first apparatus comprises a Network Data Analytics Function and the second apparatus comprises a Management Data Analytics.

According to some examples, the first request comprises at least one information element indicating: a type of analytics required from the first apparatus; an Artificial Intelligence model to be used for the analytics; a Machine Learning model to be used for the analytics; an input data type for the analytics; at least one data source for the analytics; urgency of the analytics; scheduling of the analytics; type of reporting required for the analytics; one or more filtering conditions.

According to some examples, the first apparatus comprises a slave node.

According to some examples, the second apparatus comprises a master node.

According to some examples, the third apparatus comprises an analytics consumer.

According to a thirteenth aspect there is provided a computer program comprising instructions for causing an apparatus to perform at least the following: receiving, at the apparatus and from a second apparatus, a first request for analytics for a third apparatus; performing, by the apparatus, the analytics based on the first request; sending, from the apparatus to the second apparatus, a response comprising information reporting at least one of an amount of computational resources used to perform the analytics at the first apparatus and data provided by the analytics at the first apparatus.

According to a fourteenth aspect there is provided a computer program comprising instructions stored thereon for performing at least the following: receiving, at a first apparatus and from a second apparatus, a first request for analytics for a third apparatus; performing, by the first apparatus, the analytics based on the first request; sending, from the first apparatus to the second apparatus, a response comprising information reporting at least one of an amount of computational resources used to perform the analytics at the first apparatus and data provided by the analytics at the first apparatus.

According to a fifteenth aspect there is provided a non-transitory computer readable medium comprising program instructions for causing an apparatus to perform at least the following: receiving, at the apparatus and from a second apparatus, a first request for analytics for a third apparatus; performing, by the apparatus, the analytics based on the first request; sending, from the apparatus to the second apparatus, a response comprising information reporting at least one of an amount of computational resources used to perform the analytics at the first apparatus and data provided by the analytics at the first apparatus.

According to an sixteenth aspect there is provided a non-transitory computer readable medium comprising program instructions stored thereon for performing at least the following: receiving, at a first apparatus and from a second apparatus, a first request for analytics for a third apparatus; performing, by the first apparatus, the analytics based on the first request; sending, from the first apparatus to the second apparatus, a response comprising information reporting at least one of an amount of computational resources used to perform the analytics at the first apparatus and data provided by the analytics at the first apparatus.

According to a seventeenth aspect there is provided an apparatus comprising means for performing: receiving, at the apparatus from a second apparatus, a request to open a charging data record for analytics, the analytics provided from the second apparatus and a third apparatus to a fourth apparatus, wherein the request to open a charging data record for the MDAS comprises at least one information element describing the analytics; opening the charging data record; sending, to the second apparatus, a response confirming that the charging data record has been opened.

According to some examples, the apparatus comprises a Charging Enablement Function.

According to some examples, the second apparatus comprises a master node.

According to some examples, the third apparatus comprises a slave node.

According to some examples, the fourth apparatus comprises an analytics consumer.

According to an eighteenth aspect there is provided an apparatus comprising: at least one processor; and at least one memory including computer program code; the at least one memory and the computer program code configured to, with the at least one processor, cause the apparatus at least to perform: receiving, at the apparatus from a second apparatus, a request to open a charging data record for analytics, the analytics provided from the second apparatus and a third apparatus to a fourth apparatus, wherein the request to open a charging data record for the MDAS comprises at least one information element describing the analytics; opening the charging data record; sending, to the second apparatus, a response confirming that the charging data record has been opened.

According to some examples, the apparatus comprises a Charging Enablement Function.

According to some examples, the second apparatus comprises a master node.

According to some examples, the third apparatus comprises a slave node.

According to some examples, the fourth apparatus comprises an analytics consumer.

According to a nineteenth aspect there is provided an apparatus comprising: circuitry for: receiving, at the apparatus from a second apparatus, a request to open a charging data record for analytics, the analytics provided from the second apparatus and a third apparatus to a fourth apparatus, wherein the request to open a charging data record for the MDAS comprises at least one information element describing the analytics; opening the charging data record; sending, to the second apparatus, a response confirming that the charging data record has been opened.

According to a twentieth aspect there is provided a method comprising: receiving, at a first apparatus from a second apparatus, a request to open a charging data record for analytics, the analytics provided from the second apparatus and a third apparatus to a fourth apparatus, wherein the request to open a charging data record for the MDAS comprises at least one information element describing the analytics; opening the charging data record; sending, to the second apparatus, a response confirming that the charging data record has been opened.

According to some examples, the first apparatus comprises a Charging Enablement Function.

According to some examples, the second apparatus comprises a master node.

According to some examples, the third apparatus comprises a slave node.

According to some examples, the fourth apparatus comprises an analytics consumer.

According to a twenty first aspect there is provided a computer program comprising instructions for causing an apparatus to perform at least the following: receiving, at the apparatus from a second apparatus, a request to open a charging data record for analytics, the analytics provided from the second apparatus and a third apparatus to a fourth apparatus, wherein the request to open a charging data record for the MDAS comprises at least one information element describing the analytics; opening the charging data record; sending, to the second apparatus, a response confirming that the charging data record has been opened.

According to a twenty second aspect there is provided a computer program comprising instructions stored thereon for performing at least the following: receiving, at a first apparatus from a second apparatus, a request to open a charging data record for analytics, the analytics provided from the second apparatus and a third apparatus to a fourth apparatus, wherein the request to open a charging data record for the MDAS comprises at least one information element describing the analytics; opening the charging data record; sending, to the second apparatus, a response confirming that the charging data record has been opened.

According to a twenty third aspect there is provided a non-transitory computer readable medium comprising program instructions for causing an apparatus to perform at least the following: receiving, at the apparatus from a second apparatus, a request to open a charging data record for analytics, the analytics provided from the second apparatus and a third apparatus to a fourth apparatus, wherein the request to open a charging data record for the MDAS comprises at least one information element describing the analytics; opening the charging data record; sending, to the second apparatus, a response confirming that the charging data record has been opened.

According to a twenty fourth aspect there is provided a non-transitory computer readable medium comprising program instructions stored thereon for performing at least the following: receiving, at a first apparatus from a second apparatus, a request to open a charging data record for analytics, the analytics provided from the second apparatus and a third apparatus to a fourth apparatus, wherein the request to open a charging data record for the MDAS comprises at least one information element describing the analytics; opening the charging data record; sending, to the second apparatus, a response confirming that the charging data record has been opened.

An electronic device may comprise an apparatus as described herein.

In the above, various aspects have been described. It should be appreciated that further aspects may be provided by the combination of any two or more of the various aspects described above.

Various other aspects and further embodiments are also described in the following detailed description and in the attached claims.

According to some aspects, there is provided the subject matter of the independent claims. Some further aspects are defined in the dependent claims. The embodiments that do not fall under the scope of the claims are to be interpreted as examples useful for understanding the disclosure.

### Description of Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a terminal;
Figure 4 shows an example of a network;
Figure 5 shows an example of a network;
Figure 6 shows an example method;
Figure 7 shows an example method flow diagram;
Figure 8 shows an example method flow diagram;
Figure 9 shows an example method flow diagram;
Figure 10 shows a schematic representation of a non-volatile memory medium storing instructions which when executed by a processor allow a processor to perform one or more of the steps of the method of Figures 7, 8 and 9.

### Detailed description

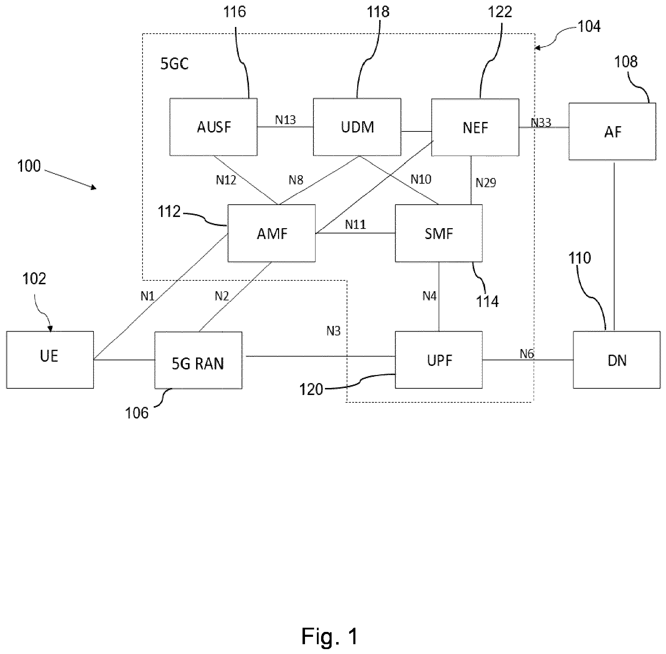

In the following certain embodiments are explained with reference to mobile communication devices capable of communication via a wireless cellular system and mobile communication systems serving such mobile communication devices. Before explaining in detail some examples of the present disclosure, certain general principles of a wireless communication system and mobile communication devices are briefly explained with reference to Figures 1 to 3 to assist in understanding the technology underlying the described examples.

In a wireless communication system 100, such as that shown in Figure 1, mobile communication devices/terminals or user apparatuses, and/or user equipments (UE), and/or machine-type communication devices 102 are provided wireless access via at least one base station (not shown) or similar wireless transmitting and/or receiving node or point. A communication device is provided with an appropriate signal receiving and transmitting apparatus for enabling communications, for example enabling access to a communication network or communications directly with other devices. The communication device may access a carrier provided by a station or access point, and transmit and/or receive communications on the carrier.

In the following certain examples are explained with reference to mobile communication devices capable of communication via a wireless cellular system and mobile communication systems serving such mobile communication devices.

Figure 1 shows a schematic representation of a 5G system (5GS) 100. Example methods and systems described herein may be implemented in a 5GS or any other suitable communication system. The 5GS may comprises a device 102 such as user equipment or terminal, a 5G access network (5G-AN) 106, a 5G core network (5GC) 104, one or more network functions (NF), one or more application function (AF) 108 and one or more data networks (DN) 110.

The 5G-AN 106 may comprise one or more gNodeB (gNB) distributed unit functions connected to one or more gNodeB (gNB) centralized unit functions.

The 5GC 104 may comprise an access management function (AMF) 112, a session management function (SMF) 114, an authentication server function (AUSF) 116, a user data management (UDM) 118, a user plane function (UPF) 120, a network exposure function (NEF) 122 and/or other NFs. Some of the examples as shown below may be applicable to 3GPP 5G standards. However, some examples may also be applicable to 4G, 3G and other 3GPP standards.

In a communication system, such as that shown in Figure 1, mobile communication devices/terminals or user apparatuses, and/or user equipments (UE), and/or machine-type communication devices are provided with wireless access via at least one base station or similar wireless transmitting and/or receiving node or point. The terminal is provided with an appropriate signal receiving and transmitting apparatus for enabling communications, for example enabling access to a communication network or communications directly with other devices. The communication device may access a carrier provided by a station or access point, and transmit and/or receive communications on the carrier.

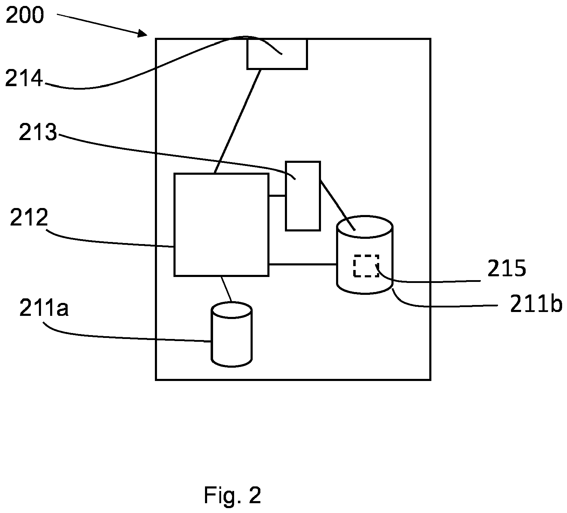

Figure 2 illustrates an example of a control apparatus 200 for controlling a function of the 5G-AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G-AN or the 5GC. In some examples, each function of the 5G-AN or the 5GC comprises a control apparatus 200. In alternative examples, two or more functions of the 5G-AN or the 5GC may share a control apparatus.

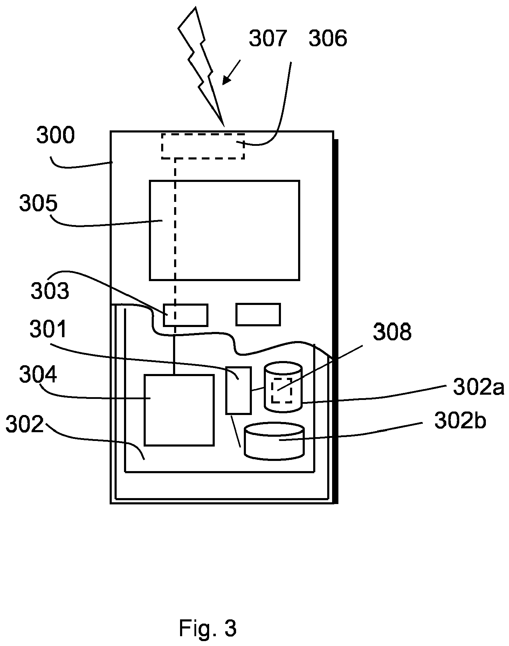

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302a and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus may be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

Management Data Analytics (MDA) provide an insight that assists decision functions or services. MDA may provide one or more of the following:
(i) numeric results related to statistics or predictions, e.g., average values, Cumulative Distribution Functions (CDF), etc.,
(ii) recommendation options, e.g., optimal target cell
(iii) root cause results.

Typically, MDA results are provided for a specific time frame and for particular target objects, for example: a management object - Distinguished Name (DN); an area of interest (e.g., a geographical area); a User Equipment (UE); a set of UEs; etc...

Several MDA use cases consume user and/or service-related analytics from Network Data Analytics Function (NWDAF). This may introduce a form of indirect charging since the production of analytics activity of MDA and NWDAF are related.

Analytics may be provided by at least one of: MDA; NWDAF; a combination of MDA or NWDAF.

According to some examples, a method for charging analytics results towards an consumer is provided. The analytics results may be provided by one or more of: MDA; NWDAF; a combination of MDA or NWDAF. In some examples, an interface for charging analytics results towards an analytics consumer is provided. The interface can include specific conditions and events that can help the charging engine. The analytics can be charged for analytics performed at the NWDAF, the MDA or for interdependent analytics at the MDA and NWDAF.

It should be noted that throughout this specification, the terms Management Data Analytics Service (MDAS) and MDA MnS are equivalent and may be used interchangeably. Management Data Analytics Service (MDAS) may comprise the services exposed by the MDA. MDAS can be consumed by various consumers, for example and without limitation: Management functions MnFs (i.e., MnS producers/consumers for network and service management), Network Functions NFs (e.g., NWDAF), SON functions, network and service optimization tools/functions, SLS assurance functions, human operators, and AFs, etc.

The analytics output is provided by the analytics producer to the corresponding analytics consumer that requested the analytics. An MDAS output provided by an MDAS producer can be consumed by any entity (any MDAS consumer) with appropriate authorisation and authentication.

Examples provide methods for charging MDA results towards an MDAS consumer. Examples describe conditions and events that can help the charging engine charge the MDA results to the MDAS consumer. The conditions may be characterized considering the processing effort that is needed, the complexity of algorithm involved, the effort to collect input data as well as the urgency, type and amount of output data needed by the MDA MnS consumer.

Examples provide methods for charging analytics results towards an analytics consumer. Examples describe conditions and events that can help the charging engine charge the MDA and NWDAF results to the consumer. The conditions may be characterized considering the processing effort that is needed, the complexity of algorithm involved, the effort to collect input data as well as the urgency, type and amount of output data needed by the analytics consumer.

In certain cases, MDA may also rely on analytic results provide by NWDAF related to specific UE(s), session or service experience. In certain cases, NWDAF may rely on analytic results provided by MDA related to specific UE(s), session or service experience. For example this is the case of service experience described in clause 7.2.2.1 and 8.4.2.1 in 3GPP TS 28.104, or the observed service experience included in clause 6.4 of 3GPP TS 23.288, where RAN analytics are needed.

Some examples relate the charging of these complementary analytics between MDA and NWDAF. In some examples, the analytics between MDA and NWDAF are not independent, but related with one impacting the other in terms of the additional processing needed and the selection of algorithm types, e.g., the results of AI/ML model used in NWDAF can affect the expected input of the AI/ML model used in MDA.

The selection of input data, (i.e., raw data or other analytics), also needs to be coordinated or shared when NWDAF and MDA interoperate. For example, the observed service experience in NWDAF requires RAN analytics for particular UEs with the selection and plurality of managed objects, e.g., base station or cells or even the selection of slice, for calculating RAN analytics being dependent of UE mobility and UE subscription profile.

At the same time this interdependency impacts the latency of the delivery of the overall analytics result, requiring a coordinated means of establishing a processing speed and prioritization handling that fulfils the consumer request.

The events can include a conventional time schedule, threshold level, e.g., load level, number and type of managed objects (DSs) involved, e.g. base stations, slices, etc., UE movement, i.e. mobility, and number of UEs.

Some examples coordinate the selection of at least one of: time; objects and UEs.

In some examples there is also provided a method to allow the MDA MnS consumer to control the type and amount of charging.

In some examples there is also provided a method to trigger Analytics Charging of an end-to-end network Slice with different domains/technologies (Core/Radio/Transport). Currently, the input provided for the Analytics Charging is only available through NWDAF (Core Domain).

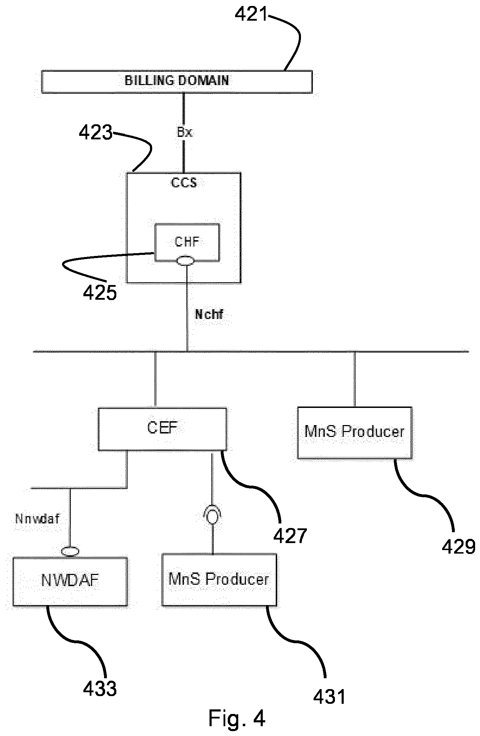

Charging Analytics is considered in 3GPP TS 32.240 (section 4.2.4); however this focuses only on the Core network domain. Such an example architecture is shown in Figure 4. Billing Domain 421 is connected via a Bx interface to Converged Charging System (CCS) 423. CCS 423 comprises Charging Function (CHF) 425.

In the example of Figure 4, CHF is connected via an Nchf interface to Charging Enablement Function (CEF) 427 and MnS Producer 429. CEF 427 is connected to Network Data Analytics Function (NWDAF) 433 via a Nnwdaf interface. CEF 427 is also connected to MnS producer 431. Charging architecture for the Management Domain is supplied using NWDAF 433 in Figure 4.

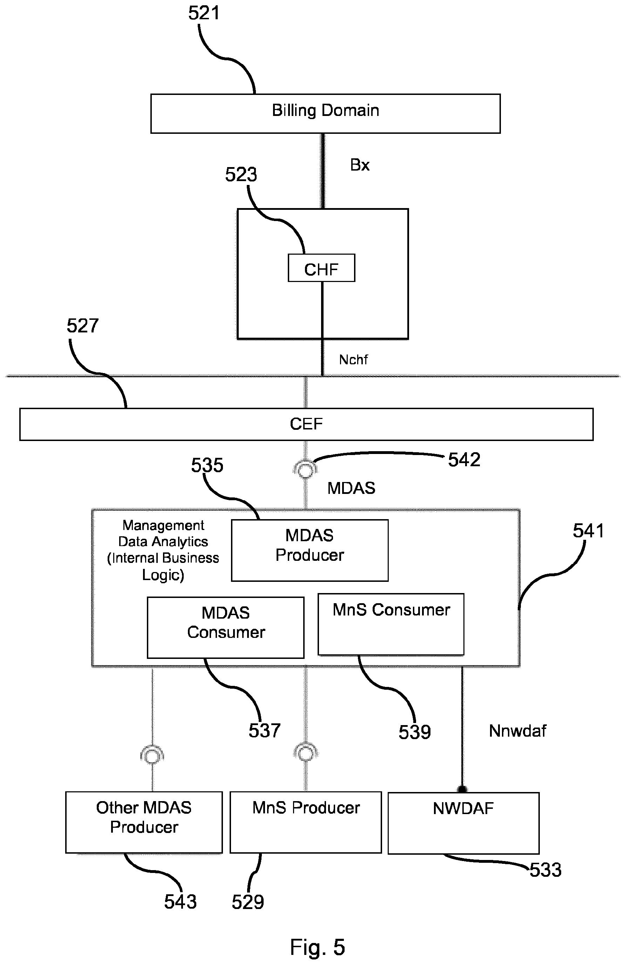

Figure 5 shows an example that uses Management Data Analytics (MDA) 541. NWDAF analytics may also be provided. MDA 541 comprises Management Data Analytics Service (MDAS) Producer 535 and one or more MDAS Consumer such as MDAS Consumer 537 and MDAS Consumer 539.

MDA 541 is connected to CEF 527 via an MDAS interface 542. CEF 527 is connected to CHF 523 via Service based architecture. CHF 523 is connected to the Service Based architecture via an Nchf interface. CEF 527 is connected to Billing Domain 521 via a Bx interface.

MDA 541 is connected to MnS Producer 529, NWDAF 533 (via an Nnwdaf interface) and an Other MDAS Producer 543.

MDA use cases, MDA frameworks and MDA capabilities (including request and reporting) are discussed in 3GPP TS 28.809 and 3GPP TS 28.104. 3GPP TS 32.240 describes generic charging principles, and 3GPP TS 28.201 describes charging for analytics in the control plane (i.e. NWDAF including certain conditions for triggering an event, i.e., time schedule, threshold based and number of notify events). 3GPP TS 28.201 also describes a charging process for analytics.

Examples consider charging events and features on the MDAS charging interface while considering the inter-relation with NWDAF and/or while considering charging consequences when MDAS works together with NWDAF causing indirect charging. Charging on NWDAF or MDA may include at least one of:
(i) processing in terms of the, i.e., CPU, storage, RAM and energy consumption;
(ii) type of analytics and AI/ML Model;
(iii) AI/ML Model training, validation, etc.;
(iv) input data sources, e.g. gNB, NF, and load created in the network;
(v) urgency or respond time, or needed prioritization;
(vi) analytics target, i.e., plethora of managed objects, e.g. gNBs, or number of UEs, or geographical area;
(vii) analytics time schedule and duration of MDA report;
(viii) type of results, statistics, predictions, recommendations, root cause;
(ix) reporting conditions, e.g., UE movement, threshold based; and
(x) amount and size of output data and delivery mechanisms.

According to some examples, an MDAS interface 542 towards the charging system (CEF 527, CHF 523, Billing Domain 521, etc.) is used to charge for management data analytics. According to some examples, MDAS interface 542 towards the charging system is used for indirect charging and the interaction with NWDAF 533 and MDA 541 is used for indirect charging related to management data analytics and control plane analytics.

Charging can consider two aspects:
1) local based on analytics functions at at least one of the MDA 541 and NWDAF 533;
2) interdependent based on the analytics need from NWDAF 533 at MDA 541 and from MDA 541 and NWDAF 533.

When a consumer requests analytics that rely on interdependent coordination and information exchange among the MDA 541 and NWDAF 533, then indirect charging can take place. Indirect charging can follow the "master-slave" paradigm with one analytics function, (which in some examples may be the analytics function that receives the consumer request and needs to perform the majority of analytics) instructing the other analytics function what to do in terms of charging focusing on interdependent processes. The analytics master node needs also to determine the request or subscription attributes towards the analytics slave node. Interdependent processes among MDA 541 and NWDAF 533 may include at least one of the following:
- **Type of analytics:** Selection of analytics capability for receiving analytics results. The use case, i.e. the analytics capability may be considered. The use case may can be a continuous process, for example to make sure of an assurance goal, or on demand, for example prediction of a NF load. An on-demand request may be considered to comprise a request where a consumer needs an analytics result when the consumer makes the request;
- **AI/ML Model:** Selection of AI/ML Model type and the respective version to be compatible. Different AI/ML algorithms used for MDAS may introduce distinct charging. This may reflect the complexity in the deployment or the advance features of an algorithm;
- **Input data:** Considering with analytics targets, e.g., when analytics targets are UEs then the selection of base stations involved in RAN analytics shall consider potential UE movements. The type of sources, e.g., gNB, NF, Slice MnS, etc., may be considered. In some examples, the load that is created in the network, i.e. how much effort is needed to collect such input may also be considered;
- **Respond time and prioritization:** Considering the consumer indicated urgency of the response in order to estimate the time needed for the interdependent analytics type process. an assurance in delivery within a certain time frame may be considered. How fast the analytics are required or what type of prioritization for the analytics is needed may be considered;
- **Filtering conditions:** Indicating UE movement, entering area of interest, load thresholds, etc., for when to expect the reply of the analytics result
- **Reporting type:** Indicating the reporting mechanism of the interdependent analytics results considering file, streaming and notifications
- **Amount of output data:** Counting the size of the received analytics report. Size of file(s), stream(s) or notification(s) may be considered.

Such charging conditions related to analytics are able to create charging items with respect to events and/or sessions or a mix as per 3GPP TS 32.290.

In some examples, events may be charged immediately i.e., online as the service is offered.

In some examples, offline and online charging may be combined to provide converged charging.

Furthermore, charging can also take into account certain MnS capabilities such as the type of control of the MDA results, e.g., modifying any of the respective attributes listed above taking into account the need for further algorithm training, validation, etc.

Some examples allow indirect charging, where a consumer requests analytics results which can be computed when the analytics producer receives as input cross-domain analytics in addition to the analytics produced locally. Examples of such situations could occur during service experience MDA 541 requiring NWDAF 533 QoE analytics, or when NWDAF 533 needs RAN analytics based on Minimization of Drive Test (MDT) input data from Operations, Administration and Maintenance (OAM). Charging caused by indirect requests that need interdependent coordination and information exchange among MDA 541 and NWDAF 533 may be considered. Creating a interdependent request between MDA 541 and NWDAF 533 or vice versa consumes computing and communication resource and for these reasons it shall also be included in the process of charging.

MDA use cases specified in 3GPP TS 28.104 would require NWDAF analytics as specified in in TS 23.288 and vice versa, with the specific input being interrelated to the original request in terms of the analytics type, AI/ML model, time scheduling and other filtering conditions. According to some examples, charging aspects shall follow a "master-slave" paradigm with one node either the MDAS 541 or NWDAF 533 (i.e., where the request is placed) in control of charging with certain updates needed in the in between communication in order to provide analytics outputs to Charging function (CHF 523), through CEF 527.

According to some examples, MDAS Interface 542 can be used for offline charging. Offline charging may include, for example, event-based, session-based or a mix of event-based and session-based charging. A Charging Data Request and/or a Charging Date response or offline charging may include one or more attributes. These attributes are described in the following paragraphs.

In some examples, the attributes may include an attribute indicating processing effort for providing the MDA results. This may include one or more of CPU usage, RAM usage, storage required, consumed energy, any of the PMs in 3GPP TS 28.552.

In some examples, the attributes may indicate the type of analytics used in the MDA results. In some examples, the attributes may indicate an AI/ML Model used. In some examples, the attributes may indicate a type of result in the MDA results for example: statistics, predictions, recommendations, a combination of a plurality of types of result.

In some examples, the attributes may indicate a category of input data used for the MDA results. For example, the data may be indicated as proprietary, may be from a specific group, may related to certain one or more specific geographical areas or one or more managed target objects, etc.

In some examples, the attributes may indicate a time of response or prioritization that describes a required urgency of providing the MDA results. Different times frames can be considered for charging, e.g., real-time, near real-time or non-real time. Alternatively an indicated time waiting duration X may be indicated, e.g., a time waiting duration of 2 minutes.

In some examples, the attributes may indicate a size in, e.g., MBs, or number of reports or notification updates for the MDA results. For example, the attributes may indicate a number of reports or notification updates, of analytics output data; (a notification update can assist in a case where an MDAS producer indicates that certain fields related to an MDA output are updated so the MDAS consumer may fetch such new data either from the MDAS producer or from a data server that stores analytics output data.

In some examples, the attributes may indicate network and UE conditions upon which the MDA results are provided e.g., upon UE movement, load threshold, etc.

In some examples, the attributes may indicate whether trouble shooting information is provided in the MDA report i.e. if the MDAS consumer is enabled to identify a source of potential errors in the MDA report.

In some examples, the attributes may indicate whether maintenance capabilities enable the MDA consumer to request AI/ML Model retraining.

According to some examples, MDAS Interface 542 can be used for online charging. Online charging may be used for immediate charging. Online charging can be used for Event-based or Session-based charging. An Online Charging Data Request and Response may include any of the attributes indicated above for offline charging when certain circumstances are met (for example, reporting conditions related to a network, managed target objects or UEs) and/or when certain conditions are changed by request of an MDA consumer or NWDAF consumer (for example, urgency of delivering a report or an immediate report request).

Converged charging may combine both offline and online charging.

An MDAS 542 or NWDAF 533 can create three type of events when receiving an interrelated request:
(i) preparation events that include input data collection;
(ii) request for analytics indicating a particular type, i.e., a use case, e.g. QoE prediction, NF load prediction, etc., or request for modification of any of the analytics parameters, i.e., conditions related to when MDA output shall be delivered; and
(iii) AI/ML model maintenance request, i.e., request for re-training, validation, etc.

All three types of events impact inter-related analytics charging with the master analytics node controlling the creation of a complementary request towards the slave analytics node.

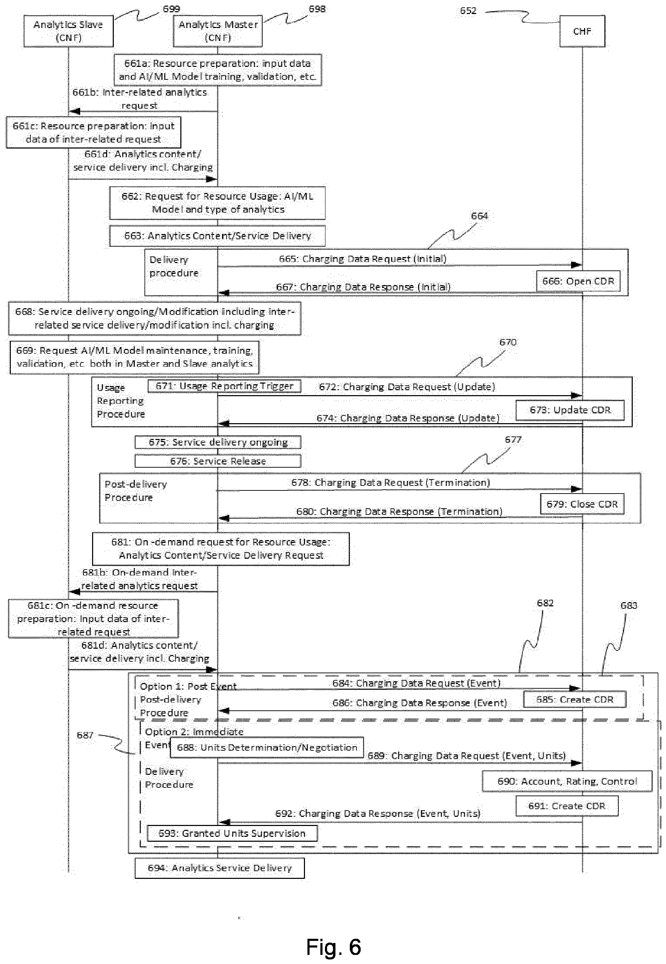

Figure 6 shows an example method that may take place at an Analytics Master 698, Analytics Slave 699 and a CHF 652. Figure 6 shows an example method including both offline and online charging scenarios for MDA.

According to some examples, analytics master 670 may comprise an MDA and Analytics Slave 699 may comprise an NWDAF. According to other examples, Analytics Master 698 may comprise an NWDAF and Analytics Slave 699 may comprise an MDA. Each of Analytics Slave 699 and Analytics Master 698 may comprise network node.

According to some examples, when NWDAF receives the consumer request then the Analytics Master 698 comprises the NWDAF, and Analytics Slave 699 comprises the MDA.

According to some examples, when the MDA receives the consumer request then the Analytics Master 698 comprises the MDA and Analytics Slave 699 comprises the NWDAF.

It should be noted that the operations performed in the method of Figure 6 need not be performed in order. For example, 682 could be performed before 677 or 670. Operations performs in the method of Figure 6 may also be performed without performing one or more of the other operations in Figure 6. As such, it will appreciate that Figure 6

661a to 680 show session-based charging for MDA. Session based MDA can be used to provide a series of analytics outputs or reports.

661 to 663 show preparation, with 661a to 661d providing the preparation and execution of inter-related analytics, analytics request and analytics service delivery before a delivering a charging procedure in 665 to 667.

At 661a, Analytics Master 698 may perform a resource preparation event. This may comprise using input data to produce an MDA output. This may also comprise AI/ML Model training and/or AI/ML Model validation.

At 661b, Analytics Master 698 sends a request for inter-related analytics to Analytics Slave 699. Analytics Master 698 may send at least one of the following, determined at 661a: the type of analytics needed from the Analytics Slave 699, the AI/ML model and the input data type and sources that shall be used, the urgency, scheduling and type of the reporting indicating also optional filtering conditions.

At 661c, Analytics Slave 699 may perform resource preparation for input data of the inter-related request.

At 661d, Analytics Slave 699 sends analytics content and/or service delivery information to Analytics Master 698. The analytics content and/or service delivery information may also comprise charging information. The analytics content and/or service delivery information sent at 661d may comprise a report and corresponding charging information based on the request of 661b. The charging information my correspond to the amount of computational resources and data transported.

At 662, Analytics Master 698 may provide a request for resource usage for an analytics calculation. From a charging view, it may be desired to charge for the use of these resources. This may comprise using a request to use an AI/ML model. The request may indicate the type of AI/Model to be used. The request may also indicate a type of analytics to be used.

At 663, Analytics Master 698 may perform analytics content/service delivery. This may be provided to an analytics consumer (this may be an MDAS consumer, NWDAF analytics consumer or a consumer of both MDAS and NWDAF analytics). The analytics content/service delivered may be include the analytics content provided from Analytics Slave 699 to Analytics Master 698 at 661d.

A charging procedure for at least one of 661a, 661b, 661c, 661d, 662 and 663 is performed at 664. In the example of Figure 6, CHF 652 does not have a currently open Charging Data Record (CDR) for Analytics Slave 699 or Analytics Master 698. At 665, Analytics Master 698 sends an initial charging data request to CHF 652. At 666, CHF 652 opens a CDR for Analytics Master 698. The CDR can also be used for any charging of Analytics Slave 699. At 667, CHF 652 sends an initial charging data response to Analytics Master 698 indicating a CDR for Analytics Master 698 has been opened.

668 to 674 show inter-related analytics charging update process due to request for maintenance of AI/ML model (i.e., a re-training request). 668 may also cause further charging events depending on the modification of the analytics request, e.g., if analytics is requested for a greater geographical area may cause a bigger size MDA output, including also charging due to inter-related analytics requests among the Analytics Master 698 and Analytics Slave 699.

At 668, the analytics content/service delivery from 663 is ongoing. In some examples, at 668 the analytics content/service delivery from 663 may be modified. For example, an AI/ML model used by Analytics Master 698 or Analytics Master 699 may be changed or re-trained.

At 669, Analytics Master 698 and/or Analytics Slave 699 may perform a request for at least one of AI/ML model maintenance, training, validation. This may comprise using a request to use an AI/ML model. The request may indicate the type of AI/Model to be used. The request may also indicate a type of analytics to be used.

At 670, a charging update procedure is performed. This may include updating a CDR of Analytics Master 698 and Analytics Slave 699 with charging information of at least one of 668 and 669. At 671, a trigger for reporting usage is triggered. At 672, Analytics Master 698 sends an update charging data request to CHF 652. At 673, CHF 652 updates the CDR for Analytics Master 698. At 674, CHF 652 sends an update charging data response to Analytics Master 698 indicating the CDR for Analytics Master 698 and Analytics Slave 699 has been updated. The update may include charging information on any of 668, 669.

It should be noted that modification 668 may cause further charging events depending on the modification of the analytics request, e.g., if analytics is requested for a greater geographical area may cause a bigger size analytics output.

675 to 680 show further analytics service delivery and a finalisation of the session-based charging procedure.

At 675, analytics service delivery by Analytics Master 698 and Analytics Slave 699 may be ongoing. At 676 Analytics Master 698 releases the analytics service. 677 shows a procedure for closing a CDR of Analytics Master 698 and Analytics Slave 699 after the analytics service is released.

At 678, Analytics Master 698 sends a termination charging data request to CHF 652. At 679, CHF 652 closes the CDR of Analytics Master 698 and Analytics Slave 699. At 680, CHF 652 sends a termination charging data response to Analytics Master 698 indicating the CDR for Analytics Master 698 and Analytics Slave 699 has been closed. The CDR may be updated with information from 675 and 676 before being closed.

681 to 694 shows charging for an on-demand analytics request. An on-demand analytics request step 681 may represent, e.g., a real-time urgent request for latency prediction, with steps 681b-681d showing the preparation and execution of inter-related analytics. Two charging options are depicted: 683 related to offline charging or post event in steps 684 to 686; and 687 related to online charging or immediate charging in 688 to 693. For the immediate charging (687) negotiation of the requested MDA capabilities considering the required charging units can optionally be performed at 688.

681 to 694 shows event-based charging for Analytics Master 698 and Analytics Slave 699. This may be considered to be "on-demand" charging. Two options are provided at 682 for events-based charging as 683 and 687. 683 shows an offline (post-event) option. 687 shows an online (immediate) option.

At 681, Analytics Master 698 may receive an on-demand request for resource usage. The request may comprise a request for analytics content/service delivery from a consumer.

At 681b, Analytics Master 698 sends a request for on-demand inter-related analytics to Analytics Slave 699. Analytics Master 698 may send at least one of the following, determined at 681: the type of analytics needed from the Analytics Slave 699, the AI/ML model and the input data type and sources that shall be used, the urgency, scheduling and type of the reporting indicating also optional filtering conditions.

At 681c, Analytics Slave 699 may perform resource preparation for input data of the inter-related request.

At 681d, Analytics Slave 699 sends analytics content and/or service delivery information to Analytics Master 698. The analytics content and/or service delivery information may also comprise charging information. The analytics content and/or service delivery information sent at 681d may comprise a report and corresponding charging information based on the request of 681b. The charging information my correspond to the amount of computational resources and data transported.

For the offline option 683, after the events indicated in request 681, 681b, 681c and 681d, a charging data request for the event is sent at 684 from Analytics Master 698 to CHF 652. The request may indicate information about the event, for example CPU usage, storage requirements, communications resource usage, etc... At 685, CHF 652 creates a CDR for the Analytics Master 698 and Analytics Slave 699 for the event. At 686, CHF 752 sends a charging data response to Analytics Master 698 indicating that the CDR has been created. Analytics service delivery shown at 694 may occur before 683. In some examples, analytics server delivery shown at 694 may continue after 683.

For the online option 687, a charging data request 678 may be sent from Analytics Master 698 to CHF 652 during the events 681, 681b, 681c and 681d. Optionally, at 688 a required number of charging units may be determined/negotiated with an MDAS/NWDAF consumer. The event and the amount of charging units for the event can then be sent at 689. At 690, CHF 652 may create at least one of an account, rating, control information for Analytics Master 698 and Analytics Slave 699. At 691, a CDR is created for the event for the Analytics Master 698 and Analytics Slave 699. At 692, a charging data response is sent from CHF 652 to Analytics Master 698 with a number of granted charging units for the event. At 693 Analytics Master 698 may supervise the event to determine that the number of granted charging units is not exceeded. At 694, Analytics Master 698 may deliver the analytics service. The analytics service may also be provided by Analytics Slave 699.

As discussed above, charging data requests and responses may be sent between an Analytics Master 698 and CHF 652 to open, update, and close a CDR. The requests and responses may be sent in some examples via an MDAS interface between the MDAS producer and the CHF and also via a CEF. This provides an efficient and secure method for managing charging data for events and session-based MDA.

Examples of information elements that may be included in a charging data request or a charging data response are shown in Table 1. It should be noted not all information elements of Table 1 need to be included in each charging data request or a charging data response.

**Table 1: An example data structure common to operations in response and request semantics.**

| **Information Element** | | **Converged Charging Category** | **Offline Only Charging Category** | **Description** | |
|---|---|---|---|---|---|
| Session Identifier | | O_{c} | O_{c} | This field identifies the charging session. | |
| Subscriber Identifier | | O_{M} | O_{M} | This field contains the identification of the individual subscriber that uses the requested service. | |
| NF Consumer Identification | | M | M | This is a grouped field which contains a set of information identifying the NF consumer of the charging service. | |
| | NF Functionality | M | M | This field contains the function of the | |
| | NF Name | O_{c} | O_{c} | This fields holds the name (i.e. UUID) of the NF consumer. At least one of the NF Address or NF Name shall be present. | |
| | NF Address | O_{c} | O_{c} | This field holds the address (i.e. IP address and/or FQDN) of NF consumer. At least one of the NF Address or NF Name shall be present. | |
| | NF PLMN ID | O_{c} | O_{c} | This field holds the PLMN ID of the network the NF consumer belongs to. | |
| Type of MDA Service | | M | M | This field holds the name or identity of the analytics. | |
| Inter-depended Analytics Type of Service | | O_{c} | O_{c} | This field holds the name or identity of the inter-depended analytics | |
| AI/ML Model | | M | M | This field holds the name or identity of the AI/ML learning model. | |
| Inter-depended Analytics AI/ML Model | | O_{c} | O_{c} | This field holds the name or identity of the inter-depended AI/ML learning model. | |
| Type of MDA Result | | M | M | This field refers to the type of MDA result, it can be (i) a numeric result, i.e., statistics or prediction, (ii) root cause analysis result or (iii) recommendation | |
| Analytics inter-depended Type of MDA Result | | O_{c} | O_{c} | This field refers to the type of result analytics that the master analytics requests from the slave analytics and it can be (i) a numeric result, i.e., statistics or prediction, (ii) root cause analysis result or (iii) recommendation. | |
| MDA CPU usage | | M | M | This field holds the CPU cycles needed to compute the request MDA result | |
| CPU usage for Analytics inter-depended request | | O_{c} | O_{c} | This field holds the CPU cycles needed to determine the attributes related to the inter-dependent request towards the analytics slave | |
| CPU usage for inter-dependent analytics on Analytics slave node | | O_{c} | O_{c} | This field holds the CPU cycles needed to compute the requested inter-dependent analytics result on the analytics slave node | |
| MDA Memory usage | | M | M | This field holds the memory needed to store the request MDA result | |

| **Information Element** | **Converged Charging Category** | **Offline Only Charging Category** | **Description** | | |
|---|---|---|---|---|---|
| Memory usage for inter-dependent analytics on Analytics slave node | O_{c} | O_{c} | This field holds the memory needed to store the requested result of the inter-dependent analytics on the analytics slave node | | |
| Input Data | M | M | This field holds size of the input data needed to compute the request MDA result | | |
| Analytics inter-depended Input Data | O_{c} | O_{c} | This field holds size of the input data instructed by the analytics master node towards the analytics slave node needed to compute the requested analytics result | | |
| Size of MDA Report | M | M | This field holds size of the input data needed to compute the request MDA result | | |
| Analytics inter-depended Size of Report | O_{c} | O_{c} | This field holds size of the input data needed to compute the inter-depended analytics requested result at the analytics slave node | | |
| MDA Reporting Method | M | M | This field represent the type of reporting | | |
| Analytics inter-depended Reporting Methods | O_{c} | O_{c} | This field represent the type of reporting between the analytics master and analytics slave. It shall be noted that this reporting method can be different from the MDA or NWDAF reporting method and that it is determined at the analytics master node. | | |
| MDA Conditions | O | O | Correlated input that can be used for more accurate rating group or for quota granting | | |
| Analytics inter-depended Conditions | O_{c} | O_{c} | Correlated input that can be used for more accurate rating group or for quota granting in the analytics slave | | |
| Offline or online | M | M | This field indicate that the MDA output is related to offline or online charging. | | |
| Analytics inter-depended | O_{c} | O_{c} | This field indicates inter-dependent analytics | | |
| MDA Real-time Reporting | O_{M} | O_{M} | This field indicate that the MDA output is related to real-time reporting. | | |
| Analytics Inter-depended Real-time Reporting | O_{c} | O_{c} | This field indicate that the inter-dependent analytics output reporting at the analytics slave is real-time. | | |
| MDA Near real-time Reporting | O_{M} | O_{M} | This field indicate that the MDA output is related to near real-time reporting. | | |
| Analytics Inter-depended Near real-time Reporting | O_{c} | O_{c} | This field indicate that the inter-dependent analytics output reporting at the analytics slave is near real-time. | | |
| MDA Non-real-time Reporting | O_{M} | O_{M} | This field indicate that the MDA output is related to non-real-time reporting. | | |
| Analytics Inter-depended non-real-time Reporting | O_{c} | O_{c} | This field indicate that the inter-dependent analytics output reporting at the analytics slave is non-real time. | | |
| Input Data Source Recording | O | O | This field indicates the option of monitoring the data sources used as input to the AI/ML model in case of a fault to enable backtracking for root cause analysis. | | |
| Analytics inter-depended input data source recording | O_{c} | O_{c} | This field indicates the option of monitoring the data sources used as input to the AI/ML model in case of a fault to enable backtracking for root cause analysis for the case of inter-dependent analytics at the analytics slave. | | |
| AI/ML Training Request | M | M | This field indicates the training or retraining request from an MDA MnS consumer for the AI/ML model that is used. | | |
| AI/ML Training Request in Analytics Slave | O_{c} | O_{c} | This field indicates the training or retraining request issued from the analytics master towards the analytics slave for the AI/ML model that is used. | | |
| Charging Identifier | O_{M} | - | This field contains the charging identifier allowing correlation of charging information. Only applicable if not provided in the NF (CTF) consumer specific structure. | | |
| Invocation Timestamp | M | M | This field holds the timestamp of the charging service invocation by the NF consumer | | |
| Invocation Sequence Number | M | M | This field contains the sequence number of the charging service invocation by the NF consumer in a charging session. | | |
| Retransmission Indicator | O_{c} | O_{c} | This field indicates if included, this is a retransmitted request message. | | |
| One-time Event | O_{c} | - | This field indicates, if included, that this is event based charging and whether this is a one-time event in that there will be no update or termination. | | |
| One-time Event Type | O_{c} | - | This field indicated the type of the one-time event, i.e. Immediate or Post event charging. | | |
| Notify URI | O_{c} | - | This field contains URI to which notifications are sent by the CHF. The latest received value shall always be used at notifications. | | |
| Supported Features | O_{c} | - | This field indicates the features supported by the NF consumer. | | |

| **Information Element** | | | **Converged Charging Category** | **Offline Only Charging Category** | **Description** |
|---|---|---|---|---|---|
| Service Specification Information | | | O_{c} | - | This field identifies the technical specification for the service (e.g. TS 32.255) and release version (e.g. Release 16) that applies to the request. It is for information. |
| Triggers | | | O_{c} | O_{c} | This field identifies the event(s) triggering the request and is common to all Multiple Unit Usage occurrences. |
| Multiple Unit Usage | | | O_{c} | O_{c} | This field contains the parameters for the quota management request and/or usage reporting. It may have multiple occurrences. |
| | Rating Group | | M | M | This field holds the identifier of a rating group. |
| | Requested Unit | | O_{c} | - | This field indicates, if included, that quota management is required. It may additionally contain the amount of requested service units for a particular category. |
| | | Time | O_{c} | - | This field holds the amount of requested time. |
| | | Total Volume | O_{c} | - | This field holds the amount of requested volume in both uplink and downlink directions. |
| | | Uplink Volume | O_{c} | - | This field holds the amount of requested volume in uplink direction. |
| | | Downlink Volume | O_{c} | - | This field holds the amount of requested volume in downlink direction. |
| | | Service Specific Units | O_{c} | - | This field holds the amount of requested service specific units. |
| | Used Unit Container | | O_{c} | O_{c} | This field contains the amount of used non-monetary service units measured up to the triggers and trigger timestamp. It may have multiple occurrences. |
| | | Service Identifier | O_{c} | O_{c} | This field holds the Service Identifier. |
| | | Quota management Indicator | O_{c} | - | This field holds an indicator on whether the reported used units are with quota management control, without quota management control or with quota management control temporary suspended. If the field is not present, it indicates the used unit is without quota management applied. |
| | | Triggers | O_{c} | O_{c} | This field holds reason for charging information reporting or closing for the used unit container. |
| | | Trigger Timestamp | O_{c} | O_{c} | This field holds the timestamp of the trigger. |
| | | Time | O_{c} | O_{c} | This field holds the amount of used time. |

| **Information Element** | | **Converged Charging Category** | **Offline Only Charging Category** | **Description** | |
|---|---|---|---|---|---|
| | Total Volume | O_{c} | O_{c} | This field holds the amount of used volume in both uplink and downlink directions. | |
| | Uplink Volume | O_{c} | O_{c} | This field holds the amount of used volume in uplink direction. | |
| | Downlink Volume | O_{c} | O_{c} | This field holds the amount of used volume in downlink direction. | |
| | Service Specific Unit | O_{c} | O_{c} | This field holds the amount of used service specific units. | |
| | Event Time Stamps | O_{c} | O_{c} | This field holds the timestamps of the event reported in the Service Specific Units, if the reported units are event based. | |
| | Local Sequence Number | O_{M} | O_{M} | This field holds the container sequence number. | |

### Information elements used for MDA charging records

In Table 1, some information elements can be used for MDA charging records.

As shown in Table 1, an indication of an AI/ML model used for an MDAS procedure may be included as an information element in a charging data request or charging data response. According to some examples this information element may be called "AI/ML Model".

As shown in Table 1, a size of an MDA report needed to complete a requested MDA result may be included as an information element in a charging data request or charging data response. According to some examples this information element may be called "Size of MDA Report".

As shown in Table 1, an MDA conditions information element included as an information element in a charging data request or charging data response. The MDA conditions element may indicate a rating group or quota granting. According to some examples this information element may be called "MDA Conditions".

As shown in Table 1, an information element indicating whether the MDA output is related to offline or online charging may be included element in a charging data request or charging data response. According to some examples this information element may be called "Offline or online".

As shown in Table 1, an information element in the charging data request or response may indicate that the MDA output is related to real-time reporting. According to some examples this information element may be called "MDA Real-time Reporting". An information element in the charging data request or response may indicate that the MDA output is related to near real-time reporting. According to some examples this information element may be called "MDA Near real-time Reporting". An information element in the charging data request or response may indicate that the MDA output is related to non-real-time reporting. According to some examples this information element may be called "MDA Non-real-time Reporting".

As shown in Table 1, an information element in the charging data request or response may indicate that an option is available to the MDAS consumer to monitor the data sources used as input to the AI/ML model in case of a fault to enable backtracking for root cause analysis. According to some examples this information element may be called "Input Data Source Recording".

### Information Elements related to NWDAF/MDA MnS requests and reporting

Some information elements in Table 1 can be used for NWDAF requests and reporting or for MDA MnS requests and reporting. These are considered below.

As shown in Table 1, an information element in the charging data request or response may indicate a name or an identity of the analytics that have been or are to be used. According to some examples this information element may be called "Type of MDA Service".

As shown in Table 1, an information element in the charging data request or response may indicate a type of MDA results, which may comprise a numeric result, i.e., statistics or prediction, root cause analysis result or recommendation. According to some examples this information element may be called "Type of MDA Result".

As shown in Table 1, an information element in the charging data request or response may indicate the CPU cycles needed to compute the requested MDA result. According to some examples this information element may be called "MDA CPU usage".

As shown in Table 1, an information element in the charging data request or response may indicate the memory needed to compute the requested MDA result. According to some examples this information element may be called "MDA Memory usage".

As shown in Table 1, an information element in the charging data request or response may indicate the size of the input data needed to compute the requested MDA result. According to some examples this information element may be called "Input Data".

As shown in Table 1, an information element in the charging data request or response may indicate the type of reporting requested. According to some examples this information element may be called "MDA Reporting Method".

As shown in Table 1, an information element in the charging data request or response may indicate an AI/ML model that is used in a training or re-training request from an MDA MnS consumer. According to some examples this information element may be called "AI/ML Training Request".

### Information Elements related to inter-dependent analytics

Some information elements in Table 1 can be used for inter-dependent analytics between NWDAF and MDAS. These are considered below.

As shown in Table 1, an information element in the charging data request or response may indicate the name or identity of the inter-dependent analytics. According to some examples this information element may be called "Inter-depended Analytics Type of Service".

As shown in Table 1, an information element in the charging data request or response may indicate the name or identity of the inter-dependent AI/ML learning model. According to some examples this information element may be called "Inter-depended Analytics AI/ML Model".

As shown in Table 1, an information element in the charging data request or response may refers to the type of result analytics that the master analytics requests from the slave analytics and it can be (i) a numeric result, i.e., statistics or prediction, (ii) root cause analysis result or (iii) recommendation. According to some examples this information element may be called "Analytics Inter-depended Type of MDA Result".

As shown in Table 1, an information element in the charging data request or response may indicate the CPU cycles needed to determine the attributes related to the inter-dependent request towards the analytics slave. According to some examples this information element may be called "CPU usage for Analytics inter-depended request".

As shown in Table 1, an information element in the charging data request or response may indicate the CPU cycles needed to compute the requested inter-dependent analytics result on the analytics slave node. According to some examples this information element may be called "CPU usage for inter-depended analytics on Analytics slave node".

As shown in Table 1, an information element in the charging data request or response may indicate the memory needed to store the requested result of the inter-dependent analytics on the analytics slave node. According to some examples this information element may be called "Memory usage for inter-dependent analytics on Analytics slave node".

As shown in Table 1, an information element in the charging data request or response may indicate the size of the input data instructed by the analytics master node towards the analytics slave node needed to compute the requested analytics result. According to some examples this information element may be called "Analytics inter-depended Input Data".

As shown in Table 1, an information element in the charging data request or response may indicate size of the input data needed to compute the inter-depended analytics requested result at the analytics slave node. According to some examples this information element may be called "Analytics inter-depended Size of Report".

As shown in Table 1, an information element in the charging data request or response may indicate type of reporting between the analytics master and analytics slave. It shall be noted that this reporting method can be different from the MDA or NWDAF reporting method and that it is determined at the analytics master node. According to some examples this information element may be called "Analytics inter-depended Reporting Methods".

As shown in Table 1, an information element in the charging data request or response may indicate correlated input that can be used for more accurate rating group or for quota granting in the analytics slave. According to some examples this information element may be called "Analytics inter-depended Conditions".

As shown in Table 1, an information element in the charging data request or response may indicate that the inter-dependent analytics output reporting at the analytics slave is real-time. According to some examples this information element may be called "Analytics Inter-depended Real-time Reporting".

As shown in Table 1, an information element in the charging data request or response may indicate that the inter-dependent analytics output reporting at the analytics slave is near real-time. According to some examples this information element may be called "Analytics Inter-depended Near real-time Reporting".

As shown in Table 1, an information element in the charging data request or response may indicate that the inter-dependent analytics output reporting at the analytics slave is non-real-time. According to some examples this information element may be called "Analytics Inter-depended Non-real-time Reporting".

As shown in Table 1, an information element in the charging data request or response that indicates the option of monitoring the data sources used as input to the AI/ML model in case of a fault to enable backtracking for root cause analysis for the case of inter-dependent analytics at the analytics slave. According to some examples this information element may be called "Analytics Inter-depended input data source recording".

As shown in Table 1, an information element in the charging data request or response the training or re-training request issued from the analytics master towards the analytics slave for the AI/ML model that is used. According to some examples this information element may be called "AI/ML Training Request in Analytics Slave".

### General

According to some examples, end-to-end analytics charging can be provided in a 5G network. In some examples, interdependency between MDA and NWDAF analytics is taken into account so that these complimentary analytics can be used for a specific UE(s), session or service experience.

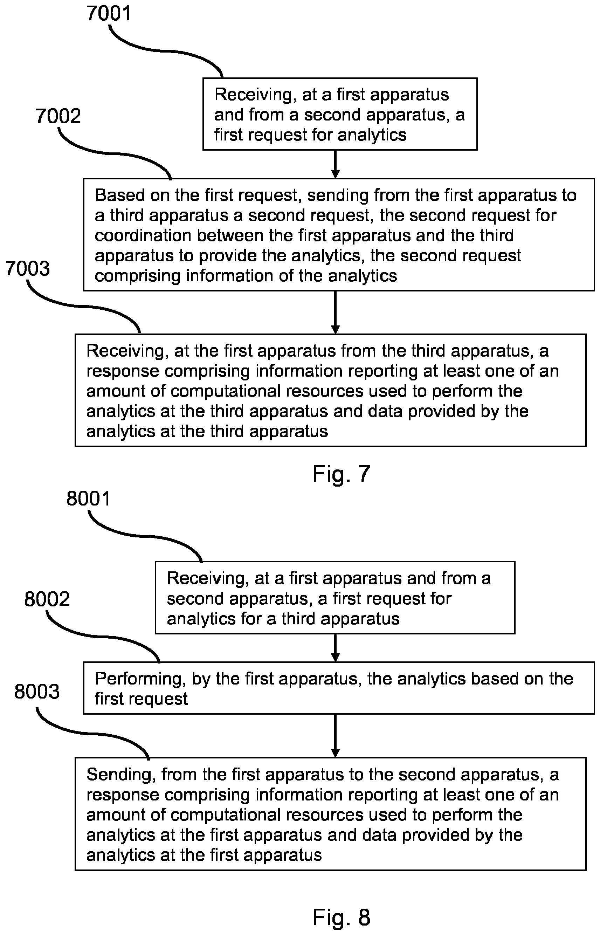

Figure 7 shows an example method flow performed by a first apparatus. The first apparatus may comprise a MN. According to some examples the first apparatus may comprise a MDAS or NWDAF.

At 7001, the method comprises receiving, at a first apparatus and from a second apparatus, a first request for analytics. According to some examples the second apparatus may comprise an analytics consumer. The analytics consumer may comprise one or more computing devices.

At 7002, the method comprises: sending, based on the first request and from the first apparatus to a third apparatus, a second request, the second request being for coordination between the first apparatus and the third apparatus to provide the analytics, the second request comprising information of the analytics. According to some examples the third apparatus may comprise a slave node. According to some examples the third apparatus may comprise a MDAS or NWDAF.

Figure 8 shows an example method flow performed by a first apparatus. The first apparatus may comprise a SN. According to some examples the first apparatus may comprise a MDAS or NWDAF.

At 8001, the method comprises receiving, at the first apparatus and from a second apparatus, a first request for analytics for a third apparatus. The second apparatus may comprise a MN in some examples. In some examples, the third apparatus may comprise an analytics consumer.

At 8002, the method comprises performing, by the first apparatus, the analytics based on the first request.

At 8003 the method comprises sending, from the first apparatus to the second apparatus, a response comprising information reporting at least one of an amount of computational resources used to perform the analytics at the first apparatus and data provided by the analytics at the first apparatus.

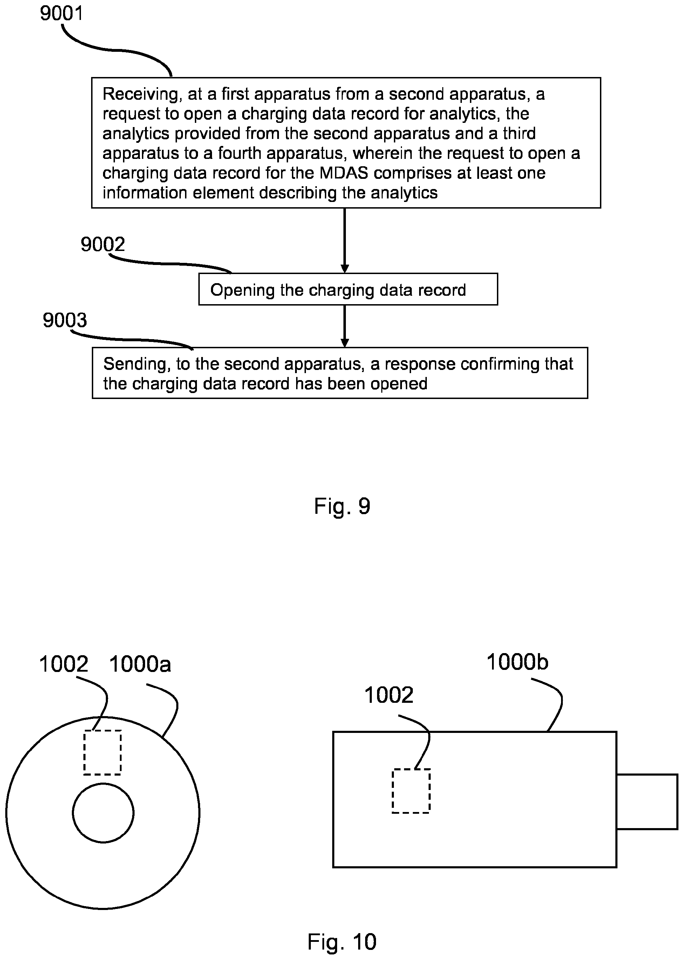

Figure 9 shows an example method flow performed by a first apparatus. According to some examples, the first apparatus may comprise a CEF.

At 9001, the method comprises receiving, at a first apparatus from a second apparatus, a request to open a charging data record for analytics, the analytics provided from the second apparatus and a third apparatus to a fourth apparatus, wherein the request to open a charging data record for the MDAS comprises at least one information element describing the analytics. According to some examples the second apparatus comprises a MN, the third apparatus comprises a SN and the fourth apparatus comprises an analytics consumer.

At 9002, the method comprises opening the charging data record.

At 9003 the method comprises sending, to the second apparatus, a response confirming that the charging data record has been opened.

Figure 10 shows a schematic representation of non-volatile memory media 1000a (e.g. computer disc (CD) or digital versatile disc (DVD)) and 1000b (e.g. universal serial bus (USB) memory stick) storing instructions and/or parameters 1002 which when executed by a processor allow the processor to perform one or more of the steps of the above-described methods.

It is noted that while the above describes example embodiments, there are several variations and modifications which may be made to the disclosed solution without departing from the scope of the present invention.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. A method comprising:
receiving, at a first apparatus and from a second apparatus, a first request for analytics;
based on the first request, sending from the first apparatus to a third apparatus a second request, the second request for coordination between the first apparatus and the third apparatus to provide the analytics, the second request comprising information of the analytics;
receiving, at the first apparatus from the third apparatus, a response comprising information reporting at least one of an amount of computational resources used to perform the analytics at the third apparatus and data provided by the analytics at the third apparatus.

2. A method according to claim 1, wherein the method comprises:
sending, to a charging function, a third request, the third request to open a charging data record for the analytics, wherein the third request comprises:
information reporting at least one of an amount of computational resources used to perform the analytics at the first apparatus and data provided by the analytics at the first apparatus; and
the information reporting the at least one of an amount of computational resources used to perform the analytics at the third apparatus and data
provided by the analytics at the third apparatus; wherein the method further comprises:
receiving, from the charging function, a message confirming that the charging data record has been opened.

3. A method according to claim 2, wherein the third request comprises an indication of whether the charging data record is to be created after the analytics is provided or while the analytics is provided.

4. A method according to any of claims 1 to 3, wherein the first apparatus comprises a Management Data Analytics Service and the third apparatus comprises a Network Data Analytics Function.

5. A method according to any of claims 1 to 3, wherein the first apparatus comprises a Network Data Analytics Function and the third apparatus comprises a Management Data Analytics Service.

6. A method according to any preceding claim, wherein the information of the analytics comprised in the second request comprises at least one of: a type of analytics required from the third apparatus; an Artificial Intelligence model to be used for the analytics; a Machine Learning model to be used for the analytics; an input data type for the analytics; at least one data source for the analytics; urgency of the analytics; scheduling of the analytics; type of reporting required for the analytics; one or more filtering conditions.

7. A method according to any preceding claim, wherein the response comprises charging information corresponding to the amount of computational resources used at the third apparatus.

8. A method according to any preceding claim, wherein the method comprises:
detecting a usage reporting trigger of the analytics, and in response:
sending, to the charging function, a request for an update of the charging data record, wherein the request to update the charging data record for the analytics comprises at least one information element describing the analytics;
receiving, from the charging function, a response confirming that the charging data record has been updated.

9. A method according to any preceding claim, wherein the method comprises:
using, at the first apparatus, the data provided by the analytics at the third apparatus to perform the analytics of the first request.

10. A method comprising:
receiving, at a first apparatus and from a second apparatus, a first request for analytics for a third apparatus;
performing, by the first apparatus, the analytics based on the first request;
sending, from the first apparatus to the second apparatus, a response comprising information reporting at least one of an amount of computational resources used to perform the analytics at the first apparatus and data provided by the analytics at the first apparatus.

11. A method according to claim 10, wherein:
the first apparatus comprises a Management Data Analytics Service and the second apparatus comprises a Network Data Analytics Function; or
the first apparatus comprises a Network Data Analytics Function and the second apparatus comprises a Management Data Analytics.

12. A method according to claim 10 or claim 11, wherein the first request comprises at least one information element indicating: a type of analytics required from the first apparatus; an Artificial Intelligence model to be used for the analytics; a Machine Learning model to be used for the analytics; an input data type for the analytics; at least one data source for the analytics; urgency of the analytics; scheduling of the analytics; type of reporting required for the analytics; one or more filtering conditions.

13. A method comprising:
receiving, at a first apparatus from a second apparatus, a request to open a charging data record for analytics, the analytics provided from the second apparatus and a third apparatus to a fourth apparatus, wherein the request to open a charging data record for the MDAS comprises at least one information element describing the analytics;
opening the charging data record;
sending, to the second apparatus, a response confirming that the charging data record has been opened.

14. An apparatus comprising means for performing the method of any of claims 1 to 13.

15. An apparatus comprising instructions, which, when executed by an apparatus, cause the apparatus to perform the method of any of claims 1 to 13.
